# EUROPEAN PATENT APPLICATION

(11) **EP 4 841 608 A1**
(43) Date of publication of application: **18.11.2026**
(21) Application number: 26165957.7
(22) Date of filing: 19.03.2026
(51) Int. Cl.: G08G 1/16, B60K 35/22, B60K 35/23, B60K 35/29, B60W 50/14

(54) **DISPLAY CONTROL DEVICE**

(30) Priority: 24.04.2025 JP 2025072717
(71) Applicant: Toyota Jidosha Kabushiki Kaisha, Toyota-shi, Aichi-ken 471-8571 (JP)
(72) Inventor: KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A display control device (20) including a control unit (21B) that displays a vehicle image, illustrating a vehicle traveling in a first travel lane, fixed at a pre-set position on a road surface image illustrating the first travel lane until the vehicle has exceeded a first range that is set in the first travel lane and in a case in which it is detected that a lamp of the vehicle for indicating an intention to change vehicle lanes from the first travel lane to a second travel lane has been switched on, cancels fixed display at the pre-set position and continuously moves the vehicle image in accordance with movement of the vehicle.

## Description

### BACKGROUND

### Technical Field

The present disclosure relates to a display control device.

### Related Art

Japanese Patent No. 7048398 discloses a vehicle control device capable of performing autonomous driving that imparts a sense of security to an occupant.

### SUMMARY

However, in the technology of Japanese Patent No. 7048398, an image illustrating a vehicle and surrounding conditions thereof is displayed on a display unit (see, for example, Fig. 8 of Japanese Patent No. 7048398).

Although a configuration to display information about the surroundings of a vehicle on a display unit is itself known, in technology hitherto, for example, an image illustrating a vehicle has been displayed in a state fixed to a given position on a display screen. However, in such fixed display, there is an issue in that in situations in which, for example, a vehicle performs a lane change, there is low compatibility between movement of the vehicle in an actual scene to the displayed image, with this liable to damage a feeling of integration between display content and reality.

An object of the present disclosure is accordingly to provide a display control device that, when information related to a vehicle and to surrounding conditions thereof is displayed in a situation in which a vehicle changes lane, makes it easy for a driver to intuitively ascertain movement of a vehicle through the display information.

### Solution to Problem

A display control device according to a first aspect includes a control unit that displays, at a display unit, a vehicle image, illustrating a vehicle traveling in a first travel lane, fixed at a pre-set position on a road surface image illustrating the first travel lane until the vehicle has exceeded a first range that is set in the first travel lane, and in a case in which it is detected that a lamp of the vehicle for indicating an intention to change vehicle lanes from the first travel lane to a second travel lane has been switched on, cancels fixed display at the pre-set position and continuously moves the vehicle image in accordance with movement of the vehicle.

In the display control device according to the first aspect, the control unit displays, at a display unit, a vehicle image, illustrating a vehicle traveling in a first travel lane, fixed at a pre-set position on a road surface image illustrating the first travel lane until the vehicle has exceeded a first range that is set in the first travel lane. However, when it is detected that a lamp of the vehicle for indicating an intention to change vehicle lanes from the first travel lane to a second travel lane has been switched on, the control unit cancels fixed display at the pre-set position and continuously moves the vehicle image in accordance with movement of the vehicle. Accordingly, when information relating to the vehicle and its surrounding conditions is being displayed in a situation in which the vehicle is performing a lane change, the display control device enables a driver to intuitively ascertain movement of the vehicle based on the displayed information.

A display control device according to a second aspect is the display control device according to the first aspect, wherein, in a case in which it is detected that the lamp has been switched on, the control unit continuously moves the vehicle image in accordance with movement of the vehicle inside the second travel lane even after the vehicle has entered the second travel lane.

In the display control device of the second aspect, when it is detected that the lamp has been switched on, the control unit continuously moves the vehicle image in accordance with movement of the vehicle inside the second travel lane even after the vehicle has entered the second travel lane. Due to the vehicle image being continuously moved even after vehicle lane change, the display control device accordingly makes it easier for the driver to intuitively ascertain movement of surrounding vehicles, raising noticeability thereof.

A display control device according to a third aspect is the display control device according to the first or second aspect, wherein the lamp is a turn indicator lamp and, in a case in which the vehicle has entered a second range, which is set in a third travel lane positioned at an opposite side from a direction indicated by the turn indicator lamp so as to be narrower than the first range, the control unit displays the vehicle image fixed at the pre-set position in the road surface image illustrating the third travel lane.

In the display control device according to the third aspect, the lamp is the turn indicator lamp. In a case in which the vehicle has entered the second range set in the third travel lane positioned on the opposite side to the direction indicated by the turn indicator lamp, the control unit displays the vehicle image fixed at the pre-set position in the road surface image illustrating the third travel lane. The display control device thereby prevents irregular displacement on a screen for the vehicle image illustrating the vehicle that is performing difficult to predict movements, thereby raising noticeability for the driver.

A display control device according to a fourth aspect is any one of the first to third aspects, wherein, in a case in which there are plural vehicles traveling in the first travel lane, the control unit cancels fixed display at the pre-set position for one vehicle image illustrating one vehicle for which it is detected that the lamp has been switched on, and continuously moves the one vehicle image in accordance with movement of the one vehicle.

In the display control device according to the fourth aspect, when there are a plurality of the vehicles traveling in the first travel lane, the control unit cancels fixed display at the pre-set position for the one vehicle image illustrating the one vehicle for which it is detected that the lamp has been switched on, and continuously moves the one vehicle image in accordance with movement of the one vehicle. The display control device is accordingly able to dynamically move the vehicle image of the vehicle having a clear intention to change lanes alone, making it easier for the driver to intuitively ascertain movements of surrounding vehicles, and raising the noticeability thereof.

A display control device according to a fifth aspect is any one of the first to third aspects, wherein, in a case in which there are a plurality of the vehicles traveling in the first travel lane, the control unit cancels fixed display at the pre-set position for a plurality of vehicle images illustrating the plurality of vehicles based on it being detected that the lamp has been switched on for one vehicle, and continuously moves each of the plurality of vehicle images in accordance with respective movements of the plurality of vehicles.

In the display control device according to the fifth aspect, when there are a plurality of the vehicles traveling in the first travel lane, the control unit cancels fixed display at the pre-set position for a plurality of vehicle images illustrating the plurality of vehicles based on it being detected that the lamp has been switched on for one vehicle, and continuously moves each of the plurality of vehicle images in accordance with respective movements of the plurality of vehicles. The display control device accordingly makes it easier to intuitively ascertain behavior of surrounding vehicles, raising the noticeability to the driver.

As described above, in the display control device according to the present disclosure, when information related to a vehicle and surrounding conditions thereof is displayed in a situation in which a vehicle is performing a lane change, a driver can intuitively ascertain movement of the vehicle through the display information.

### BRIEF DESCRIPTION OF THE DRAWINGS

Exemplary embodiments of the present disclosure will be described in detail based on the following figures, wherein:
Fig. 1 is a block diagram illustrating a hardware configuration of a vehicle;
Fig. 2 is a flowchart illustrating a flow of specific processing;
Fig. 3 is a first explanatory diagram to explain a vehicle driving situation;
Fig. 4 is a first display example displayed on a monitor;
Fig. 5 is a second explanatory diagram to explain a vehicle driving situation; and
Fig. 6 is a second display example displayed on a monitor.

### DETAILED DESCRIPTION

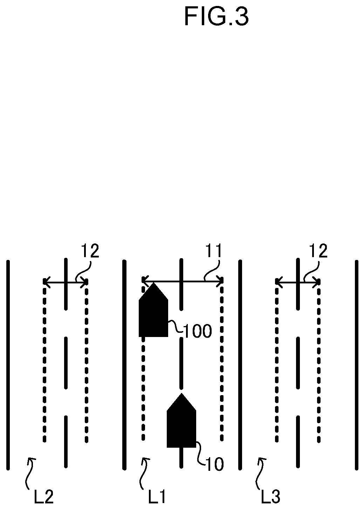

Description follows regarding vehicles according to an exemplary embodiment. In the present exemplary embodiment, the vehicles include a host vehicle 10 (see Fig. 3 etc.) driven by a specific driver, and an other-vehicle 100 driven by a driver different to the specific driver (see Fig. 3 etc.).

### First Exemplary Embodiment

First description follows regarding a first exemplary embodiment of vehicles according to the present exemplary embodiment. Note that the host vehicle 10 and the other-vehicle 100 each include basically the same configuration, and so the host vehicle 10 will be described below as a representative example thereof.

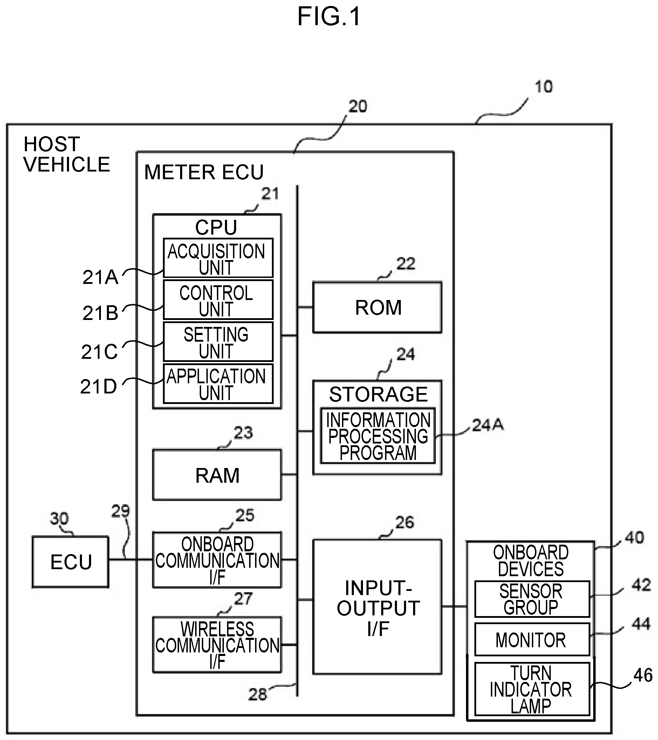

Fig. 1 is a block diagram illustrating a hardware configuration of the host vehicle 10. As illustrated in Fig. 1, the host vehicle 10 includes a meter electronic control unit (ECU) 20. The meter ECU 20 is an example of a "display control device" of the present disclosure.

The meter ECU 20 is configured including a central processing unit (CPU) 21, read only memory (ROM) 22, random access memory (RAM) 23, storage 24, an onboard communication interface (I/F) 25, an input-output I/F 26, and a wireless communication I/F 27. Each of the configuration elements are connected together through an internal bus 28 so as to be capable of communicating with each other.

The CPU 21 is a central processing unit that executes various programs and controls each section. Namely, the CPU 21 reads a program from the ROM 22 or the storage 24, and executes the program using the RAM 23 as a work area. The CPU 21 performs control of each configuration and various computation processing according to the program recorded on the ROM 22 or the storage 24. The CPU 21 is an example of a "processor" of the present disclosure.

The ROM 22 is stored with various programs and various data. The RAM 23 serves as a work area for temporarily storing programs and/or data.

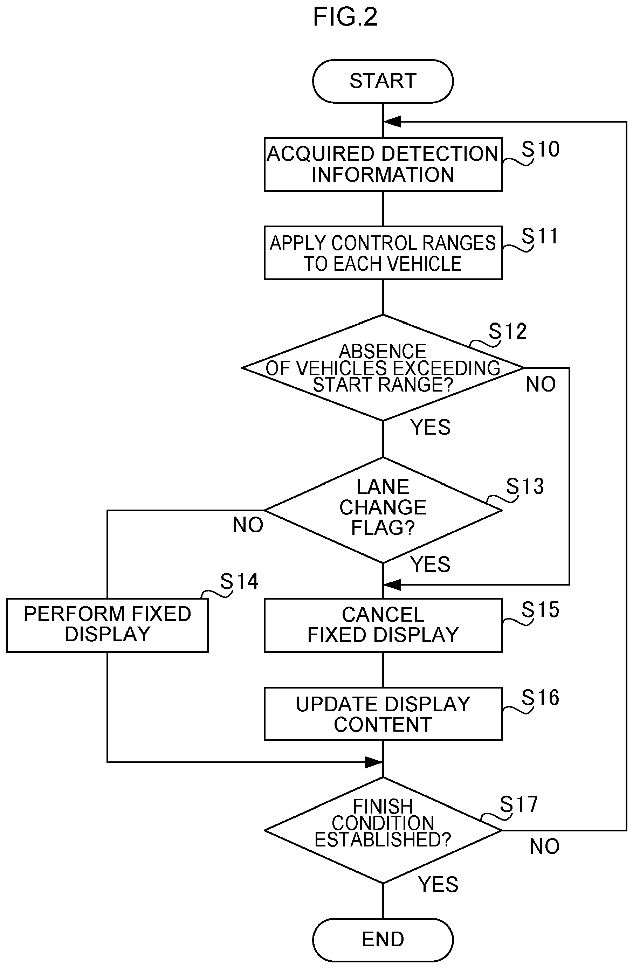

The storage 24 is configured by a storage medium, such as an embedded MultiMediaCard (eMMC), Universal Flash Storage (UFS), or the like, and stores various programs and various data. The storage 24 is stored with an information processing program 24A. The information processing program 24A is a program to cause the CPU 21 to execute specific processing described later (see Fig. 2).

The onboard communication I/F 25 is an interface for connecting to another ECU 30. A communication standard based on a controller area network (CAN) protocol is employed in this interface. The onboard communication I/F 25 is connected to an external bus 29. Note that, although omitted in the drawings, the ECUs are not limited to the ECU 30, and plural ECUs are provided according to the various functions of the host vehicle 10.

The input-output I/F 26 is an interface to communicate with the onboard devices 40 installed to the host vehicle 10.

The onboard devices 40 are various devices installed to the host vehicle 10. The host vehicle 10 includes, as examples of the onboard devices 40, a sensor group 42, a monitor 44, and turn indicator lamps 46.

The sensor group 42 is configured including various sensors and imaging means for detecting a state of the host vehicle 10 and surrounding conditions of the host vehicle 10. Specifically, the sensor group 42 includes, for example, various sensors such as a 3D-LiDAR sensor, a milliwave sensor, an infrared sensor, a turn indicator sensor, an acceleration position sensor, a shift position sensor, a vehicle speed sensor, a steering angle sensor, an angular velocity sensor, a global positioning system (GPS) sensor, an illumination sensor, a gyrosensor, and/or an accelerometer, and also includes plural cameras for capturing images of the surrounding conditions of the host vehicle 10. The sensor group 42 outputs detection results from each of the sensors and images captured by each of the cameras to a given electronic control unit, such as the meter ECU 20 or the ECU 30.

The monitor 44 is provided to a meter panel arranged in front of a driver's seat of the host vehicle 10, and is a meter display for displaying proposals of operations according to functions of the host vehicle 10, and images and the like related to explaining these functions. The monitor 44 is an example of a "display unit" of the present disclosure.

The turn indicator lamps 46 are direction indicator lamps provided as an external visual notification of intention of the host vehicle 10 to change course direction, and are arranged at the front and rear of the vehicle body.

The wireless communication I/F 27 is a wireless communication module for communicating with external devices. A communication standard such as, for example, 5G, LTE, Wi-Fi (registered trademark), Bluetooth (registered trademark), or the like is employed in the wireless communication module.

The CPU 21 of the meter ECU 20 includes, as functional configuration, an acquisition unit 21A, a control unit 21B, a setting unit 21C, and an application unit 21D. Each of these functional configurations is realized by the CPU 21 reading out and executing the information processing program 24A stored in the storage 24.

The acquisition unit 21A acquires various information acquirable by the host vehicle 10. Specifically, as the various information, the acquisition unit 21A acquires detection information of detection results of the various sensors configuring the sensor group 42, images captured by the cameras, and the like.

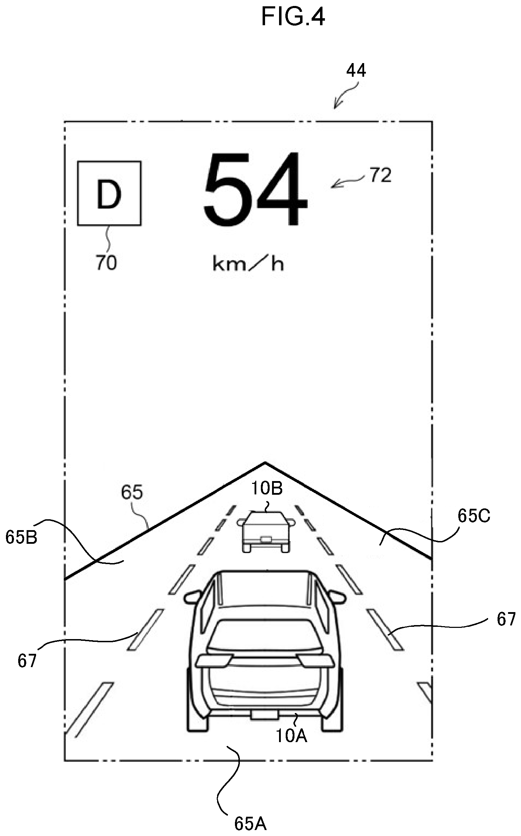

The control unit 21B performs display control related to display on the monitor 44. For example, based on detection information acquired by the acquisition unit 21A, as the display control, the control unit 21B displays, on the monitor 44, the host vehicle image 10A illustrating the host vehicle 10 (see Fig. 4 etc.) and a surrounding condition image illustrating surrounding conditions of the host vehicle 10 as viewed from a virtual viewpoint. Note that specific examples of surrounding condition images are described later.

The "virtual viewpoint" referred to here is a viewpoint set in 3-dimensional virtual space having a position of the host vehicle image 10A as the origin, with the virtual viewpoint defined by given viewpoint coordinates and viewpoint angle (direction) in virtual space. As an example, the virtual viewpoint is a viewpoint looking down at a specific viewpoint angle at the host vehicle 10 and the periphery thereof from coordinates of a specific viewpoint positioned above the host vehicle image 10A in virtual space. The control unit 21B is an example of a "control unit" of the present disclosure.

The setting unit 21C sets a control range for controlling the display position of vehicle images illustrating each vehicle on each travel lane traveled by the vehicles, such as the host vehicle 10 and the other-vehicle 100. The control range is a specific region with reference to a width direction central position of each of the travel lanes.

The setting unit 21C estimates the width direction central position of each of the travel lanes based on detection information acquired by the acquisition unit 21A. The setting unit 21C then, with reference to the central positions, sets a movement start range having a left-right width Xm, and a movement end range having a left-right width Ym, as the control range for each travel lane. Xm and Ym are set to a range narrower than the vehicle lane width Zm, and the movement start range width Xm is set wider than the movement end range width Ym.

For example, the setting unit 21C individually sets respective movement start ranges and movement end ranges for each vehicle lane for a road having three vehicle lanes each way. Note that the movement start range is an example of a "first range" of the present disclosure, and the movement end range is an example of a "second range" of the present disclosure.

The application unit 21D applies the control ranges set by the setting unit 21C to each of the vehicles, such as the host vehicle 10 and the other-vehicle 100. Based on detection information acquired by the acquisition unit 21A, the application unit 21D identifies each vehicle present in the surroundings of the host vehicle 10 (for example: only the host vehicle 10; both the host vehicle 10 and the other-vehicle 100), and furthermore estimates the travel lane where each of the vehicles is currently positioned (hereafter referred to as "current travel lane").

As an example, based on proportions occupied by a vehicle body for each vehicle lane, the application unit 21D assumes the travel lane with the largest occupied proportion to be the current travel lane for each vehicle.

The application unit 21D then applies the movement start range to the current travel lane of each vehicle, and applies the movement end range to the other travel lanes not the current travel lane. This thereby enables appropriate display control according to the movement start and movement end for each vehicle.

For example, when the host vehicle 10 and the other-vehicle 100 are present on a road having three vehicle lanes each way, the application unit 21D sets three vehicle lanes' worth of the control ranges individually for each vehicle, and applies these vehicle-specific control ranges. Note that specific examples of control ranges are described later.

Fig. 2 is a flowchart illustrating a flow of specific processing executed by the meter ECU 20. The CPU 21 reads the information processing program 24A from the storage 24, and performs the specific processing by expanding and executing the information processing program 24A in the RAM 23. As an example, the specific processing is executed automatically by repeated execution at a given time interval while the host vehicle image 10A and the surrounding condition image are being displayed on the monitor 44.

At step S10 illustrated in Fig. 2, the CPU 21 acquires detection information detectable by the host vehicle 10. The detection information includes, for example, object information as detected by a 3D-LiDAR sensor, and captured images that have been imaged by the cameras. The CPU 21 then proceeds to step S11.

At step S11, based on the detection information acquired at step S10, the CPU 21 specifies a positional relationship of each vehicle to each vehicle lane, and applies control ranges according to these positional relationships to each vehicle. The CPU 21 then proceeds to step S12.

At step S12, the CPU 21 determines whether or not there is a vehicle present that has exceeded the movement start ranges applied at step S11. The CPU 21 proceeds to step S13 when determined an absence of vehicles exceeding the movement start range (step S12: YES). However, the CPU 21 proceeds to step S15 when determined that there is a vehicle present that has exceeded the movement start range, i.e. no absence of vehicles exceeding the movement start range (step S12: NO). As an example, based on the detection information, the CPU 21 determines the presence of a vehicle that has exceeded the movement start range when over half the vehicle body is adjudged to be protruding from the movement start range.

At step S13, the CPU 21 determines whether or not there is a vehicle present that is appended with a vehicle lane change flag. In the present exemplary embodiment, the CPU 21 is configured so as to append a vehicle lane change flag to a vehicle detected with a switched ON turn indicator lamp 46. The CPU 21 proceeds to step S15 when determined that there is a vehicle appended with a vehicle lane change flag present (step S13: YES). However, the CPU 21 proceeds to step S14 when determined that there is no vehicle appended with a vehicle lane change flag present (step S13: NO).

At step S14, the CPU 21 displays the vehicle image illustrating each vehicle fixed at a pre-set position on a road surface image 65 illustrating the travel lanes travelled by each vehicle. In the present exemplary embodiment, these pre-set positions are width direction central positions on each travel lane of the road surface images 65. The CPU 21 then proceeds to step S17.

At step S15, the CPU 21 cancels fixed display at the pre-set position on the road surface image 65 for any vehicle image that illustrates a vehicle exceeding the movement start range or that illustrates a vehicle appended with a vehicle lane change flag. The CPU 21 then proceeds to step S16.

At step S16, the CPU 21 updates display content of the vehicle image that illustrates a vehicle exceeding the movement start range or a vehicle appended with a vehicle lane change flag. Specifically, the CPU 21 performs control to continuously move such a vehicle image according to actual movement of the vehicle. The CPU 21 then proceeds to step S17.

Note that in the first exemplary embodiment, even when processing has proceeded to step S15, for vehicle images that illustrate a vehicle not exceeding the movement start range and not appended with a vehicle lane change flag, such vehicle images are displayed fixed at the pre-set position on the road surface image 65 illustrating the travel lane travelled by that vehicle.

At step S17, the CPU 21 determines whether or not a predetermined finish condition has been established. The CPU 21 ends the specific processing when determined that the finish condition has been established (step S17: YES). However, the CPU 21 returns to step S10 when determined that the finish condition has not been established (step S17: NO). As an example, the CPU 21 determines that the finish condition has been established when the ignition switch of the host vehicle 10 has been switched OFF.

Next, description follows regarding changes to the display content of the monitor 44 based on the above specific processing, with reference to Fig. 3 to Fig. 6.

Fig. 3 is a first explanatory diagram to explain a vehicle driving situation. The road illustrated in Fig. 3 is provided with three vehicle lanes, a center vehicle lane L1, a left vehicle lane L2 on the left, and a right vehicle lane L3 on the right.

As illustrated in Fig. 3, the host vehicle 10 is travelling at a width direction center of the center vehicle lane L1, and ahead in the progression direction thereof, the other-vehicle 100 is travelling at a position further to the left than the width direction center of the center vehicle lane L1. In such a situation, the CPU 21 respectively applies a movement start range 11 to the center vehicle lane L1, which is the current travel lane for the host vehicle 10 and the other-vehicle 100, and applies a movement end range 12 to the left vehicle lane L2 and to the right vehicle lane L3.

Fig. 4 is a first explanatory diagram illustrating a display example displayed on a given display area of the monitor 44. The given display area is part of the area of the monitor 44, and is set so as to be visible by a driver seated in the driver's seat through an opening in the steering wheel. Specifically, Fig. 4 is a display example corresponding to the vehicle driving situation illustrated in Fig. 3.

As illustrated in Fig. 4, a shift information 70 and a vehicle speed information 72 are displayed at the top of the monitor 44.

The shift information 70 is information indicating the shift position of the host vehicle 10, and "D" is displayed in Fig. 4 to indicate that the shift position is the D range.

The vehicle speed information 72 is information indicating the speed of the host vehicle 10, and in Fig. 4 "54 km/h" is displayed to indicate that the vehicle speed is 54 km/h.

Moreover, the host vehicle image 10A and the surrounding condition image are displayed below the shift information 70 and the vehicle speed information 72. The surrounding condition image includes the road surface image 65 and the other-vehicle image 10B.

Demarcation line images 67 to demarcate the vehicle lanes on the road are displayed on the road surface image 65. The road is thereby demarcated into three vehicle lanes, a vehicle lane 65A corresponding to the center vehicle lane L1, a vehicle lane 65B corresponding to the left vehicle lane L2, and a vehicle lane 65C corresponding to the right vehicle lane L3. In Fig. 4, the host vehicle image 10A and the other-vehicle image 10B are displayed on the vehicle lane 65A.

The host vehicle image 10A is an illustrative image illustrating the host vehicle 10 generated based on a given illustrative design. As described above, the host vehicle 10 is traveling along at the width direction center of the center vehicle lane L1, and is positioned inside the movement start range 11 set in the center vehicle lane L1. The host vehicle image 10A is accordingly displayed fixed at the width direction central position of the vehicle lane 65A as viewed from the virtual viewpoint.

The other-vehicle image 10B is an illustrative image illustrating the other-vehicle 100, which is a vehicle ahead of the host vehicle 10, generated based on a given illustrative design. As illustrated in Fig. 3, although the other-vehicle 100 is traveling along the center vehicle lane L1, the position of the other-vehicle 100 is further to the left than the width direction center of the center vehicle lane L1. However, because more than half the vehicle body of the other-vehicle 100 does not protrude from the movement start range 11 set in the center vehicle lane L1, the other-vehicle image 10B is displayed fixed so as to be positioned at the width direction center of the vehicle lane 65A, and so as to be above the host vehicle image 10A as viewed from the virtual viewpoint.

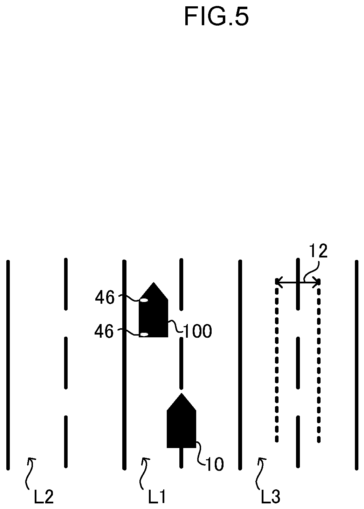

Fig. 5 is a second explanatory diagram to explain a vehicle driving situation. In Fig. 5, the turn indicator lamps 46 arranged at the vehicle body left side of the other-vehicle 100 are illustrated in a switched ON state.

In such a situation, based on detection of the switched ON turn indicator lamps 46 of the other-vehicle 100, the CPU 21 of the host vehicle 10 adjudges that the other-vehicle 100 intends to change vehicle lane, and cancels fixed display for the other-vehicle image 10B. The other-vehicle image 10B is then displayed continuously moving so as to follow movement of the other-vehicle 100.

More specifically, the CPU 21 cancels the control range being applied to the current travel lane of the other-vehicle 100 and to the travel lane positioned in the direction indicated by the turn indicator lamps 46. This means that in the state illustrated in Fig. 5, the movement end range 12 is applied only to the right vehicle lane L3 for the other-vehicle 100, and application of the control ranges is released for the center vehicle lane L1 and the left vehicle lane L2.

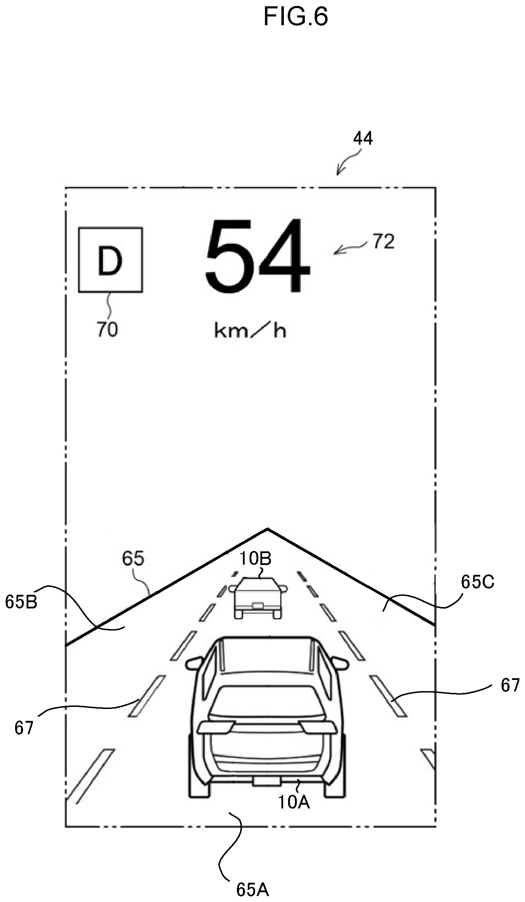

Fig. 6 is a second explanatory diagram illustrating a display example displayed on the given display area of the monitor 44. Specifically, Fig. 6 is a display example corresponding to the vehicle driving situation illustrated in Fig. 5.

As illustrated in Fig. 6, accompanying release of the fixed display of the other-vehicle image 10B, the display position of the other-vehicle image 10B is moved further to the left than the width direction center of the vehicle lane 65A so as to match the actual traveling position of the other-vehicle 100, which is a position corresponding to the left side of the width direction center of the center vehicle lane L1.

The other-vehicle image 10B is then displayed so as to continuously move from the vehicle lane 65A to the vehicle lane 65B interlocked to the other-vehicle 100 performing a lane change to the left vehicle lane L2. Furthermore, even after the other-vehicle 100 has entered the left vehicle lane L2, because a control range is not being applied to the left vehicle lane L2, the other-vehicle image 10B is displayed so as to continue continuously moving according to changes in travel position of the other-vehicle 100 inside the left vehicle lane L2.

As described above, in the meter ECU 20, the CPU 21 displays the other-vehicle image 10B illustrating the other-vehicle 100 traveling along the center vehicle lane L1 on the monitor 44 by display fixed to the width direction center of the vehicle lane 65A illustrating the center vehicle lane L1 until the other-vehicle 100 has exceeded the movement start range 11 set in the center vehicle lane L1. However, when a switched ON turn indicator lamp 46 has been detected to indicate an intention to change vehicle lane from the center vehicle lane L1 to the left vehicle lane L2, the CPU 21 cancels the fixed display at the width direction center of the vehicle lane 65A, and continuously moves the other-vehicle image 10B in accordance with movement of the other-vehicle 100. This means that when information related to the other-vehicle 100 and the surrounding conditions thereof is displayed in a situation in which the other-vehicle 100 performs a vehicle lane change, the meter ECU 20 enables the movement of the other-vehicle 100 to be intuitively ascertained by the driver through the display information. Note that the other-vehicle 100 is an example of a "vehicle" of the present disclosure, the other-vehicle image 10B is an example of a "vehicle image" of the present disclosure, the center vehicle lane L1 is an example of a "first travel lane" of the present disclosure, and the left vehicle lane L2 is an example of a "second travel lane" of the present disclosure.

Moreover, when the turn indicator lamp 46 has been detected as switched ON, the CPU 21 in the meter ECU 20 continuously moves the other-vehicle image 10B in accordance with movement of the other-vehicle 100 inside the left vehicle lane L2 even after the other-vehicle 100 has entered the left vehicle lane L2. Due to continuously moving the other-vehicle image 10B even after vehicle lane change in this manner, the meter ECU 20 makes it easier for the driver to intuitively ascertain movement of the other-vehicle 100, raising noticeability.

Here, there can be cases in which a vehicle moves in a different direction from the direction indicated by the turn indicator lamp 46, as a result of mistaken operation by the driver, changes in the surrounding conditions, or the like. The course of such a vehicle is difficult to predict, and also requires appropriate countermeasures in display processing. In such a situation, in a case in which the other-vehicle 100 has entered the movement end range 12 set in the right vehicle lane L3 positioned at the opposite side from the direction indicated by the turn indicator lamp 46, the CPU 21 in the meter ECU 20 causes the other-vehicle image 10B to be displayed fixed to the width direction center of the vehicle lane 65C illustrating the right vehicle lane L3. Such control is, in the situation illustrated in Fig. 5, for example, executed in a case in which the other-vehicle 100 has both entered the right vehicle lane L3, and also over half of the vehicle body is contained in the movement end range 12 set for the right vehicle lane L3. In such cases, after moving the other-vehicle image 10B to the width direction center of the vehicle lane 65C in the display example of the monitor 44 illustrated in Fig. 6, for example, the CPU 21 then displays the other-vehicle image 10B fixed at this position. The meter ECU 20 is thereby able to prevent irregular displacement, on the screen, of the other-vehicle image 10B that is making movements that are difficult to predict, thereby improving noticeability for the driver. Note that the right vehicle lane L3 is an example of a "third travel lane" of the present disclosure.

Furthermore, in a case in which there are plural vehicles such as the host vehicle 10 and the other-vehicle 100 traveling in the center vehicle lane L1, the CPU 21 of the meter ECU 20 cancels fixed display at the width direction center of the vehicle lane 65A for a vehicle whose turn indicator lamp 46 was detected as being switched ON, specifically cancels fixed display for the other-vehicle image 10B illustrating the other-vehicle 100, and continuously moves the other-vehicle image 10B in accordance with movement of the other-vehicle 100. In such cases, the host vehicle image 10A illustrating the host vehicle 10 is displayed continuously fixed at the width direction center of the vehicle lane 65A. The meter ECU 20 is accordingly able to dynamically move the other-vehicle image 10B illustrating the other-vehicle 100 having a clear intention to change lanes alone, making it easier for the driver to intuitively ascertain movements of surrounding vehicles, and raising the noticeability thereof.

### Second Exemplary Embodiment

Next, description follows regarding a second exemplary embodiment of a vehicle according to the present exemplary embodiment, with duplicate content to the above exemplary embodiment either omitted or simplified.

Although in the above exemplary embodiment a configuration is adopted in which, when plural vehicles travel in the center vehicle lane L1, fixed display at the width direction center of the vehicle lane 65A is released for a vehicle image that illustrates a vehicle detected with switched ON turn indicator lamp 46, there is no limitation thereto.

In the meter ECU 20 according to the second exemplary embodiment, when there are plural vehicles, such as the host vehicle 10 and the other-vehicle 100, traveling in the center vehicle lane L1, based on a vehicle, specifically the other-vehicle 100, being detected with switched ON turn indicator lamp 46, the CPU 21 cancels fixed display at the width direction center of the vehicle lane 65A for plural vehicle images illustrating the plural vehicles and then continuously moves each of the plurality of vehicle images in accordance with respective movements of the plurality of vehicles. In such cases, the CPU 21 moves the other-vehicle image 10B continuously according to the movement of the other-vehicle 100, and also moves the host vehicle image 10A continuously in accordance with movement of the host vehicle 10. The meter ECU 20 thereby makes it even easier to intuitively ascertain behavior of surrounding vehicles, raising the noticeability to the driver.

### Other

Although detailed explanation has been given above regarding exemplary embodiments of the present disclosure, with reference to the appended drawings, the technical scope of the present disclosure is not limited by such examples. It will be apparent to a person of ordinary skill in the art of the present disclosure that various modifications and improvements can be arrived at within the scope of the technical idea as recited by the scope of the patent claims, and obviously such modifications and improvements should be understood as belonging to the technical range of the present disclosure.

The advantageous effects described for the above exemplary embodiments are merely explanatory and indicative, and are not limited to those described in the above exemplary embodiments. Namely, in the technology according to the present disclosure, together with the advantageous effects described in the above exemplary embodiments, or instead of the advantageous effects described in the above exemplary embodiments, other advantageous effects may be exhibited as will be apparent from the above exemplary embodiments to a person of ordinary skill in the art of the present disclosure.

The processing described in the above exemplary embodiments can be implemented by a dedicated hardware circuit. In such cases, the processing may be executed by a single hardware unit alone, or may be executed by plural hardware units.

In the above exemplary embodiments, the information processing program 24A was stored in the storage 24. However, there is no limitation thereto, and the information processing program 24A may be stored on the ROM 22.

In the above exemplary embodiments, examples of a "vehicle" in the present disclosure are not limited to the other-vehicle 100, and may be the host vehicle 10. In such cases, the CPU 21 cancels fixed display at the width direction center of the vehicle lane 65A of the host vehicle image 10A based on a turn indicator lamp 46 of the host vehicle 10 being detected as switched ON, and continuously moves the host vehicle image 10A in accordance with movement of the host vehicle 10.

In the above exemplary embodiment, a lamp of a vehicle indicating an intention to change vehicle lanes is not limited to being a turn indicator lamp 46. For example, such a lamp may be a hazard lamp. In such cases, the CPU 21 executes similar processing to when the switched ON turn indicator lamp 46 is detected, but based on a switched ON hazard lamp being detected.

In the above exemplary embodiment, based on detection that the turn indicator lamp 46 of the other-vehicle 100 has been switched ON, the CPU 21 of the host vehicle 10 cancels the movement start range 11 being applied to the current vehicle lane of the other-vehicle 100, and the movement end range 12 being applied to the travel lane positioned in the direction indicated by the turn indicator lamp 46. However, the control range to be released is not limited thereto. For example, in such a situation the CPU 21 may release the movement start range 11 applied to the current vehicle lane alone, and maintain the movement end range 12 being applied to the other travel lane. Adopting such a configuration enables, for example, a fixed position to be set at first for the other-vehicle image 10B even though the other-vehicle 100 is continuing to perform a lane change, and then after this, to perform display processing with reference to the fixed position as an origin for lane change.

Moreover, a configuration may be adopted in which, in a case in which the movement end range 12 being applied to the other travel lane is maintained, the CPU 21 dynamically changes the width of the movement end range 12 according to the operation characteristics of the other-vehicle 100. For example, the CPU 21 may set the movement end range 12 relatively narrow when a sudden lane change has been determined from estimation of lateral acceleration of the other-vehicle 100 based on the detection information and, on the other hand, may set the movement end range 12 wider when a gentle vehicle lane change is being performed.

Furthermore, a configuration may be adopted in which, in a case in which the movement end range 12 being applied to another travel lane is maintained, the CPU 21 sets a given time-out time for when the movement end range 12 is applicable. For example, the CPU 21 may execute processing when the specific time-out time has elapsed to switch a control range for the travel lane where the other-vehicle 100 will be positioned after vehicle lane change from the movement end range 12 to the movement start range 11. Such a configuration enables display control to be appropriately performed for the start of the next movement of the other-vehicle 100.

In the above exemplary embodiment, a configuration may be adopted in which the CPU 21 estimates a strength of intention to change lanes of a vehicle based on turn indicator operation, and performs display control of vehicle images according to such strength. For example, the CPU 21 may compute an intention score based on timewise changes to detection information related to turn indicator operation pressure, steering angle change, vehicle velocity gradient, and surrounding vehicle distance acquired through the sensor group 42, and release fixed display of the vehicle image in a case in which the intention score is a given value or over, and maintain fixed display when less than the given value.

In the above exemplary embodiment, a configuration may be adopted in which the CPU 21 performs display control according to reliability of a turn indicator being switched ON as an indicator of intention, as determined based on past history of whether or not a vehicle lane change was actually performed after a turn indicator was switched ON. For example, the CPU 21 may accumulate a time series of detection information related to a turn indicator lamp ON signal, steering angle change, and presence or absence of a vehicle lane change, as acquired through the sensor group 42, compute the reliability based on such detection information, and release the fixed display of the vehicle image for a vehicle having a reliability of a given value or over, while maintaining the fixed display for a vehicle with reliability of less than the given value.

In the above exemplary embodiment, a configuration may be adopted in which the CPU 21 performs dynamic control of a timing for display switching based on a time distribution from turn indicator lamp switch ON to vehicle lane change start. For example, a configuration may be adopted in which the CPU 21 accumulates a time series of detection information related to turn indicator lamp switch ON times and steering angle change timings as acquired through the sensor group 42, and then references a statistical model stored by situation in the storage 24 to compute an appropriate display switching time, and cancels fixed display of the vehicle image at a timing according to the computation result thereof.

In the above exemplary embodiment, a configuration may be adopted in which the CPU 21 suppresses display switching and performs warning display to prevent misrecognition when a fault or mistaken switch ON of the turn indicator lamp is suspected. For example, a configuration may be adopted in which, based on waveform information related to periodicity, voltage, and continuous ON time of a turn indicator lamp ON signal acquired through the onboard communication I/F 25, the CPU 21 maintains the fixed display of the vehicle image and also displays a warning icon on the monitor 44 in a case in which the waveform information is determined to fall outside a given range.

Note that the specific processing executed by the CPU 21 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the specific processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the information processing program 24A is pre-stored (installed) in the storage 24, there is no limitation thereto. The information processing program 24A may be provided in a format recorded on a recording medium such as a compact disk read only memory (CD-ROM), a digital versatile disk read only memory (DVD-ROM), a universal serial bus (USB) memory, or the like. Moreover, the information processing program 24A may in a format downloaded from an external device over a network. Note that the technology of the present disclosure is applicable to programs and program products.

## Claims

1. A display control device (20), comprising a control unit (21B) that is configured to:
display, at a display unit (44), a vehicle image (10B), illustrating a vehicle (100) traveling in a first travel lane, fixed at a pre-set position on a road surface image (65) illustrating the first travel lane until the vehicle (100) has exceeded a first range (11) that is set in the first travel lane; and
in a case in which it is detected that a lamp of the vehicle (100) for indicating an intention to change vehicle lanes from the first travel lane to a second travel lane has been switched on, cancel fixed display at the pre-set position and continuously move the vehicle image (10B) in accordance with movement of the vehicle (100).

2. The display control device (20) of claim 1, wherein the control unit (21B) is configured to, in a case in which it is detected that the lamp has been switched on, continuously move the vehicle image (10B) in accordance with movement of the vehicle (100) inside the second travel lane even after the vehicle (100) has entered the second travel lane.

3. The display control device (20) of claim 1 or 2, wherein:
the lamp is a turn indicator lamp (46); and
the control unit (21B) is configured to, in a case in which the vehicle (100) has entered a second range (12), which is set in a third travel lane positioned at an opposite side from a direction indicated by the turn indicator lamp (46) so as to be narrower than the first range (11), display the vehicle image (10B) fixed at the pre-set position in the road surface image (65) illustrating the third travel lane.

4. The display control device (20) of any one of claims 1 to 3, wherein the control unit (21B) is configured to, in a case in which there is a plurality of the vehicles (100) traveling in the first travel lane, cancel fixed display at the pre-set position for one vehicle image (10B) illustrating one vehicle (100) for which it is detected that the lamp has been switched on, and continuously move the one vehicle image (10B) in accordance with movement of the one vehicle (100).

5. The display control device (20) of any one of claims 1 to 3, wherein the control unit (21B) is configured to, in a case in which there is a plurality of the vehicles (100) traveling in the first travel lane, cancel fixed display at the pre-set position for a plurality of vehicle images (10B) illustrating the plurality of vehicles (100) based on it being detected that the lamp has been switched on for one vehicle (100), and continuously move each of the plurality of vehicle images (10B) in accordance with respective movements of the plurality of vehicles (100).
